# EUROPEAN PATENT SPECIFICATION

(11) **EP 4 508 526 B1**
(45) Date of publication and mention of the grant of the patent: **21.10.2026**
(21) Application number: 23731981.9
(22) Date of filing: 02.06.2023
(51) Int. Cl.: G06F 8/36, G06F 8/70, G06F 8/71

(54) **COMPUTER-IMPLEMENTED METHOD AND SYSTEM FOR GENERATING A COMMAND PIPELINE FOR CONTROLLING A TECHNICAL DEVICE**
COMPUTERIMPLEMENTIERTES VERFAHREN UND SYSTEM ZUR ERZEUGUNG EINER BEFEHLSPIPELINE ZUR STEUERUNG EINER TECHNISCHEN VORRICHTUNG
PROCÉDÉ ET SYSTÈME MIS EN UVRE PAR ORDINATEUR POUR GÉNÉRER UN PIPELINE DE COMMANDE POUR COMMANDER UN DISPOSITIF TECHNIQUE

(30) Priority: 09.06.2022 EP 22465539
(43) Date of publication of application: 19.02.2025
(73) Proprietor: Siemens Aktiengesellschaft, 80333 München (DE)
(72) Inventor: CHIS, Alexandru, 500435 Brasov (RO); COMAN, Andrei Laurentiu, 500256 Brasov (RO); IUGA, Delia Elena, 507086 Brasov (RO); MORRA, Carlos, 10247 Berlin (DE)
(74) Representative: Siemens Patent Attorneys
(86) International application number: PCT/EP2023/064814
(87) International publication number: WO 2023/237439

(56) References cited:
- WO-A1-2022/093178
- US-A1- 2016 253 172
- US-A1- 2019 258 976
- US-A1- 2022 058 018

## Description

The invention relates to a computer-implemented method and a system for generating a command pipeline as a continuous integration pipeline for controlling a technical device by a generation device.

The invention further relates to a computer program, an electronically readable data carrier and a data carrier signal.

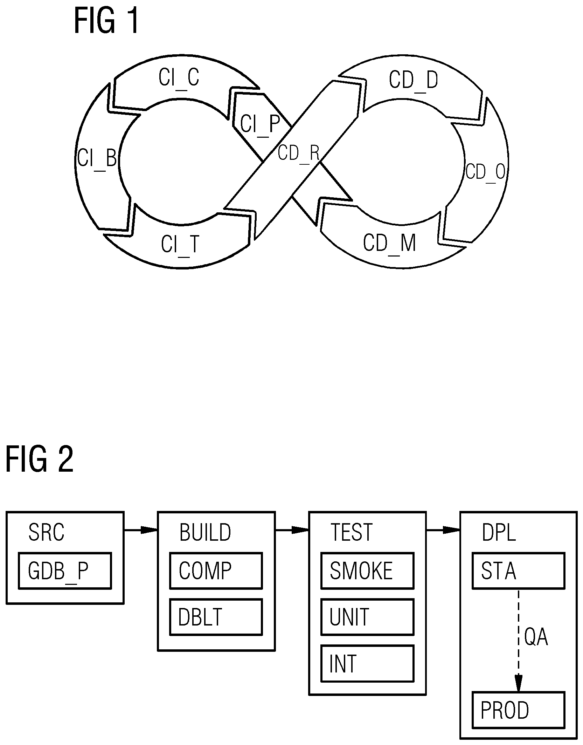

In software engineering combined practices of "Continuous Integration" (CI) and "Continuous Deployment and Delivery" (CD) are applied, abbreviated with "CI/CD", which is illustrated in **Fig. 1****.**

CI/CD is a way of developing software in which it is foreseen to release updates at any time in a sustainable way. When changing code is routine, development cycles are more frequent, meaningful, and faster.

The Continuous Integration CI is represented by the process sequence Build CI_B, Code CI_C, Plan CI_P and Test CI_T.

The Continuous Deployment and Delivery CD is represented by the process sequence Deploy CD_D, Monitor CD_M, Operate CD_O and Release CD_R.

A CI/CD pipeline automates the software delivery process. The pipeline builds code, runs tests (CI), and safely deploys a new version of the application (CD).

Automated pipelines remove manual errors, provide standardized feedback loops to developers, and enable fast product iterations.

**Fig. 2** shows the stages of a CI/CD pipeline according to the art.

Starting from a software source SRC, including a global database push GDB_P, a software build BUI phase is executed, including compiling COMP and docker build DBLT phase for a container application.

Subsequently, a software test phase TEST includes a smoke phase SMOKE, a unit phase UNIT and an integration phase INT, followed by a deployment phase DPL with a staging phase STA leading to a production phase PROD.

Writing Continuous Integration / Continuous Deployment and Delivery (CI/CD) pipelines is a repetitive and tedious activity which is usually done manually and requires a lot of project specific scripts that are hard to maintain and/or reuse.

In the known art, the creation of CI/CD pipelines is usually done in a manual manner and is project specific. Some of the components, scripts or the configuration of the pipeline can be copied and adapted for similar projects.

However, the identification of said projects and which components can be reused is usually done manually based on the expert's experience and thus, a manual step.

The detection of similar repositories like on GitHub was already discussed. Nonetheless, the automatic generation of pipeline based on similar repositories has not been addressed in any previous work.

The publication US 2019/258976 A1 discloses techniques for generating pipeline object recommendations for software development projects. However, it is related only to software development and not for software for controlling hardware devices. Moreover, the object recommendations are related to development attributes, like data storage or software development elements or tools.

The publication WO 2022/093178 Al, US 2022/058018 Al and US 2016/253172 Al show examples relating to continuous integration and delivery pipelines.

Therefore, it is the objective of the invention to disclose a method for automating the pipeline creation by means of analysis of similarity to previous projects and reuse of pipeline definitions to achieve a higher level of automation, to increase the internal processes at software development, to enhance the performance of the software and to minimize mis-functions.

The objective of the invention is solved by a computer-implemented method for generating a command pipeline for the control of a technical device, comprising the steps of:
a) Providing a first command pipeline with first commands for the generation device from a first database,
b) Providing at least one second command pipeline with second commands for the generation device from at least one second database,
c) Determining similarities between the first and the at least one second command pipeline by the generation device,
d) Identifying at least one similarity between the first and the at least one second command pipeline by the generation device, and based on a predefined threshold for the at least one similarity, and selecting the at least one second command pipeline as a generated pipeline, when the threshold is exceeded by the at least one similarity,
e) Providing the generated pipeline to a command device and controlling the technical device with the generated pipeline.

Thereby, the new first command pipeline is replaced by a similar second pipeline, which is already known and approved. Therefore, further engineering efforts like testing can be reduced.

The first data base can be a local data base, providing a first command pipeline for controlling the technical device.

The second data base can be a global data base, providing a second, for instance an approved or verified command pipeline for controlling the technical device.

A command pipeline in general is an instruction sequence containing commands.

The predefined threshold can be defined manually or automatically using predefined quality parameters.

Further, if at determining similarities at step c) an error measure based on the sum of squared differences is used: $M \left(w, p, {r}_{j}\right) = {\sum }_{i = 1}^{n} {w}_{i} {\left({p}_{i}-{r}_{i , j}\right)}^{2}$ where
- *p_{i,} r_{i,j}*: are percentages of programming or scripting languages in the local and remote projects, e.g. by means of number of lines of code, number of code modules, represented by the first and the at least one second command pipeline, respectively,
- *Wᵢ*: represents the relevance to each language, represented by the first and the at least one second command pipeline, assigned manually by an user, which must be positive numbers and ${\sum }_{i = 1}^{n} {w}_{i} = 1$ ,
- *n*: is the maximum number of programming languages from local and remote projects, repre- sented by the first and the at least one second command pipeline,
- *i*: is the index of a programming language for the first and the at least one second command pipeline,
- *j*: is the number of the remote project, represented by the first and the at least one second command pipeline,
and the most similar project j, out of the first and the at least one second command pipeline, corresponds to the minimum value of *M*(***w, p, rⱼ***)***.***

The selection of the portion of common or similar programming or scripting languages in the local and remote projects, like lines or code or number of software modules, within the squared difference as an error measure leads to the advantage, that by this an easy way for comparing pipelines is found, which can be implemented very efficient and with low complexity.

In conjunction with a weight on the programming or scripting language the performance at the similarity determination can be further improved and a beneficial effect on the overall efficiency can be achieved.

The counter *i* at the sum in the formula above, counts through all different languages, with the maximum number m of programming languages, from local and remote projects.

In other words, the method provides most similar pipelines with respect to the similarity of used programming or scripting languages. Thus, an improvement by an inherent reduction of resulting errors or bugs in the selected pipeline is achieved, since less interface adaptions were included, which could be subject for implicit bugs and errors of the total codes or scripts.

The invention can be further developed, if the percentages of programming or scripting languages in the local and remote projects is determined by using the number of code lines or software modules in the same language.

Thus, the similarity represents the function on the code itself and the impact on more bugs and errors within the code can be limited. Using the length of the code as a basis for the similarity assessment regarding programming or scripting language, the result is a very reliable command pipeline.

The invention can be further developed, if determining similarities at step c) is performed for all of the at least one command pipeline, and a sorted list of all of the at least one command pipeline is generated according to the similarity achieved before, and when selecting the at least one second command pipeline as a generated pipeline, the item of the list is selected, which provides the lowest error measure according to the preceding claim.

In other words, the command pipeline is selected from the at least one command pipeline, which provides the lowest error measure and thus, is most similar to the first command pipeline.

Using the lowest error measure as defined before provides a very simple, accurate and representative measure for the similarity when comparing command pipelines regarding their programming language and/or syntax and/or semantics.

The objective of the invention is also solved by a system for generating a command pipeline for the control of a technical device, comprising a first and at least one second database, a generation device and a command device, and the system is configured to execute the steps of the method according to the preceding claims.

The objective of the invention is also solved by a computer-program-product with machine-readable instructions stored therein, which cause a processing unit, if executed, to execute the method according to the invention.

The objective of the invention is also solved by a computer program, comprising instructions, which cause a computer at its execution to execute the steps of the method according to the invention.

The objective of the invention is also solved by an electronically readable data carrier with readable control information stored thereon, which comprise the computer program according to the preceding claim configured to control a processing device, when using the data carrier at the processing device, and to execute the steps of the method according to the invention.

The objective of the invention is also solved by a data carrier signal, transmitting the computer program according to the invention.

The invention is described in an exemplary embodiment presented in detail in the subsequent figures. The figures show:
- Fig. 1: an overview of a CI/CD pipeline,
- Fig. 2: Stages of a CI/CD pipeline,
- Fig. 3: a first embodiment of a system represented by a block diagram according to the invention,
- Fig. 4: an embodiment of the general process to synchronize data between entities of the system according to the invention,
- Fig. 5: an embodiment of the synchronization process between entities of the system according to the invention,
- Fig. 6: an embodiment with further details of the synchronization process between entities of the system according to the invention,
- Fig. 7: an embodiment with a flow chart of the method according to the invention,
- Fig. 8: an embodiment with a block diagram of the system according to the invention.

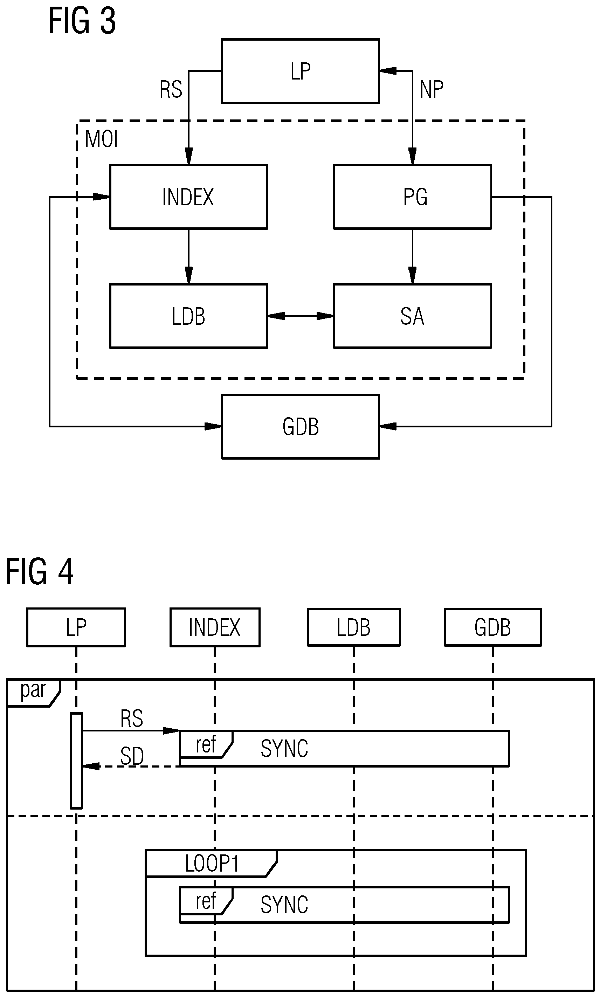

**Fig. 3** shows a first embodiment of a system represented by a block diagram according to the invention,

The invention proposes a method for automating the pipeline creation by means of analysis, i.e. determination of similarity to previous projects and reuse of pipeline definitions.

Four major components are used by a system executing the method according to the invention, namely an indexer INDEX, a pipeline generator PG, a similarity analyzer SA and a local database LDB, which are involved in the process along the external components as a local project LP and a global database GDB like a GitLab instance, and the interaction among them are presented in Fig. 3 showing the method according to the invention MAI as an exemplary embodiment.

The pipeline generator PG generates the configuration and code for the instantiation of the pipeline and the connection of the CI/CD tools.

The similarity Analyzer SA analyzes and determines the project properties and compares it to existing projects in the repositories.

The local database LDB stores the properties of the projects in the repositories.

The indexer INDEX monitors the repositories for changes and updates the local database.

The global database GDB, e.g. a Gitlab Instance, stores the repositories.

When a new CI/CD Pipeline definition is required by the local project LP, on a new pipeline demand NP, the pipeline generator PG supported by the similarity analyzer SA returns the most relevant configuration.

The local database LDB allows both synchronous and asynchronous updates of the content retrieved from the GitLab instance, on a synchronization request RS.

This update is performed by the indexer INDEX, which queries the GitLab API for the most recent changes in the repository.

**Fig. 4** shows a general process to synchronize data between entities of the system according to the invention.

The local project requests synchronization RS, the related entity performs respective actions by a synchronization step SYNC and signalizes subsequently by synchronization done SD.

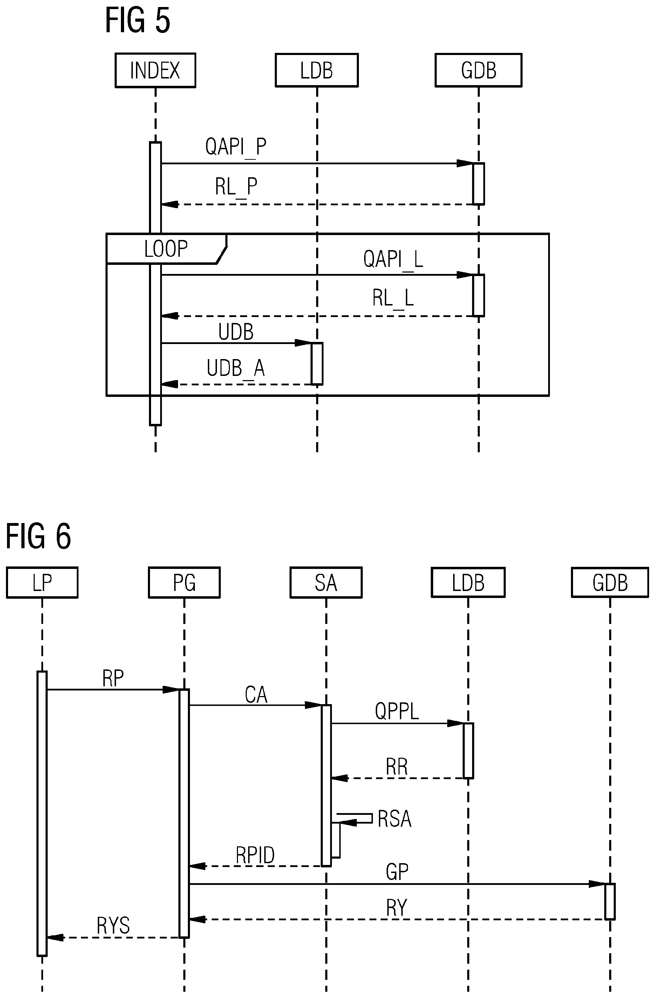

As depicted in Fig. 5, when a synchronization is called, the indexer INDEX will request the list of projects from the backing Git instance (Gitlab) and, for each of them, update the respective entries in the local database LDB with the new values for the programming languages code percentages. The new values can now be used to provide more accurate references to similar projects from which to match and grab the pipeline structure.

Optionally one or more synchronization steps SYNC can be repeated, indicated by the general reference LOOP.

Within the sequence diagram a "par" notation is used to indicate a "parallel" process.

Fig 4 shows that the synchronization process can happen synchronously or asynchronously, so either is triggered explicitly by the local project and/or is handled on an external trigger, e.g. a cron job (job scheduling utility).

Within the sequence diagram a "ref" notation is used for a reference. It is to show that another sequence, e.g. in Fig. 5 is called which impacts the three actors on top, indexer INDEX, local database LDB and Gitlab instance/ global database GDB.

To generate a new pipeline configuration for the local project LP, the following steps are executed, which are also depicted in **Fig. 5 to 7****:**
a) The indexer INDEX is triggered for instance by a scheduler or a developer.
b) The indexer INDEX queries with a the GitLab instance GDB to update the local database LDB with remote projects and their respective programming with a command QAPI_P and/or scripting languages with a command QAPI_P QAPI_L usage percentages. The GitLab instance GDB provides a respective return list for language RL_L and/or a return list for project RL_P. If necessary, the queries are repeated within a loop LOOP. Subsequently, the indexer INDEX updates the local database LDB accordingly by signal UDB and receives optionally an acknowledge signal UDB_A.
c) The similarity analyzer provides an algorithm, which uses an error measure based on the sum of squared differences: $M \left(w, p, {r}_{j}\right) = {\sum }_{i = 1}^{n} {w}_{i} {\left({p}_{i}-{r}_{i , j}\right)}^{2}$ where
   - *pᵢ, r_{i,j}*: are the percentages of programming or scripting languages in the local and remote projects, respectively,
   - *wᵢ*: represents the relevance the user assigns to each language, which must be positive numbers and ${\sum }_{i = 1}^{n} {w}_{i} = 1$,
   - *n*: is the maximum number of programming languages from local and remote projects,
   - *i*: is the index of the programming language,
   - *j*: is the number of the remote project.

The most similar project *j* corresponds to the minimum value of *M*(***w, p, rⱼ***)***.***

First, the local project LP performs a request pipeline RP call to the pipeline generator PG.

The pipeline generator PG calls the similarity analyzer SA with a call analyzer CA, which performs the algorithm explained before using signals for query project and pipeline QPPL and delivers a return result RR.

The similarity analyzer SA runs similarity determination, i.e. analysis RSA and returns with step RPID a return project ID to the pipeline generator PG.

The pipeline generator PG calls step GP to get pipeline YAML from a Git repository REPO.

GitLab uses the simplified markup language "Yet Another Markup Language" (YAML) for data serialization to define the structure of a CI/CD Pipeline. By YAML a reference to the pipeline configuration of a specific project is made.

The similarity analyzer SA returns by return YAML RY at most one project which is below the error threshold, in particular by the return YAML structure RYS.

For a Gitlab pipeline configuration file, any specificity regarding the original project is to be removed, and the configuration returned by the Gitlab Instance will go through an internal process in the Pipeline Generator which will sanitize it: remove comments, references to customer environment variables etc. Only a skeleton should be left which details the overall flow of the pipeline.
d) Based on a predefined threshold, the remote project selected at step c) is accepted or not.
e) The pipeline generator PG receives the accepted project and fetches its CI / CD pipeline configuration from the remote GitLab Instance GDB.
f) The pipeline generator PG then parses this configuration and returns the template back to the local project LP, by involving the indexer INDEX optionally.

Based on the predefined threshold for the at least one similarity, the remote or at least one second command pipeline is selected as a generated pipeline, when the threshold is exceeded by the at least one similarity.

Obviously for all embodiments, a predefined value range equals to a previous threshold with which a value can be compared, and the predefined value range comprises two thresholds, which can be exceeded in two directions, i.e. a value falls below a predefined minimum or exceeds a predefined maximum.

In practice, if more than one pipeline exceeds the predefined threshold, the pipeline with the highest degree on similarity can be chosen.

The indexer INDEX updates the local database LDB accordingly by signal UDB. Doing so, the pipeline configurations are not stored in the database. In order to determine the best project from which to grab the pipeline skeleton, the algorithm uses only the languages information, so the local database can be thought of as a cache for those. When the response from GitLab GDB with the language information is received for a specific project, the percentage of each language for that project is updated in the database and can be used right away by the similarity analyzer.

As mentioned previously, the pipeline configuration is not stored in the local database LDB. After the best project has been identified, the Configuration needs to be fetched from the repository backing that specific GitLab project.

At step f) pipeline generator PG returns the template back to the LP local project. However, the indexer INDEX is only involved in scraping Gitlab Projects and in the synchronization process.

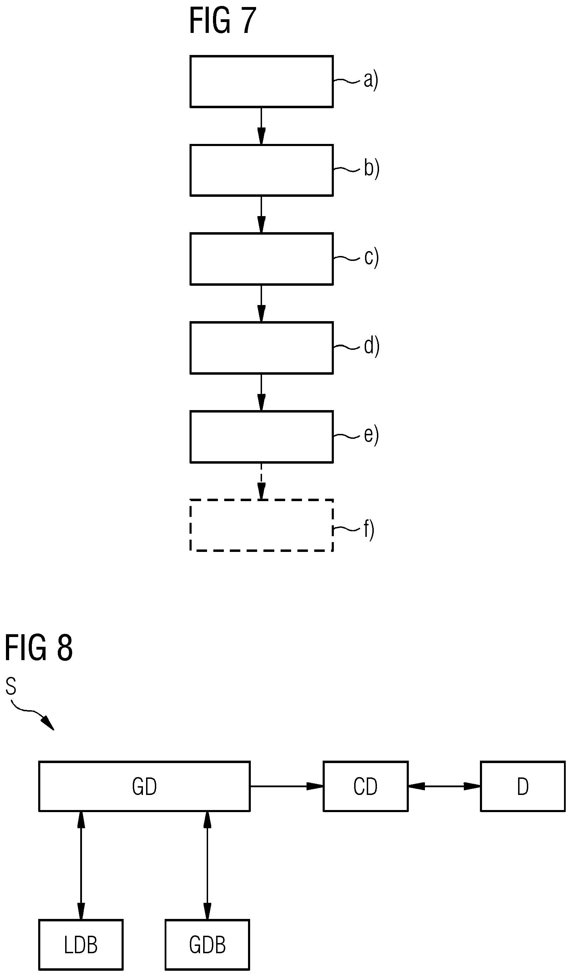

**Fig. 7** shows an embodiment with a simplified flow chart of the method according to the invention.

The step f) as described above is optional.

**Fig. 8** shows an embodiment with a simplified block diagram of a system S according to the invention.

The system S for generating a command pipeline for controlling a technical device D comprises a first and at least one second database LDB, GDB, a generation device GD, a command device CD for controlling the technical device D.

The system is configured to execute the steps of the method according to the invention.

### List of reference numerals:

- BUI: Build
- CA: call analyzer
- CD_D: deploy
- CD_M: monitor
- CD_O: operate
- CD_R: release
- CI_B: build
- CI_C: code
- CI_P: plan
- CI_T: test
- COMP: compile
- D: device
- DBLT: docker build
- DPL: Deploy
- GDB: global database
- GDB_P: global database push
- GP: get pipeline yami from repo
- INDEX: indexer
- INT: integration
- LDB: local database
- LOOP: loop, e.g. every x hours or days
- LP: local project
- MAI: embodiment of method according to the invention
- NP: new pipeline
- PG: pipeline generator
- PROD: production
- QAPI_L: query API for language
- QAPI_P: query API for project
- QPPL: query project and pipeline
- RL_L: return list for language
- RL_P: return list for project
- RP: request pipeline
- RPID: return project ID
- RR: return result
- RS: request synchronization
- RSA: run similarity analysis
- RY: return yami
- RYS: return yami structure
- S: system
- SA: similarity analyzer
- SD: synchronization done
- SMOKE: smoke
- SRC: Source
- STA: staging
- TEST: Test
- UDB: update database
- UDB_A: database updated
- UNIT: unit
- YAML: Yet Another Markup Language"
- Ref: reference
- Par: parameter

## Claims

1. Computer-implemented method for generating a command pipeline as a continuous integration pipeline for controlling a technical device (D) by a generation device, comprising the steps of:
a) Providing a first command pipeline, in form of a continuous integration pipeline, with first commands for the generation device from a first database,
b) Providing at least one approved second command pipeline, in form of a continuous integration pipeline, with second commands for the generation device from at least one second database,
c) Determining similarities between the first and the at least one second command pipeline by the generation device,
d) Identifying at least one similarity between the first and the at least one second command pipeline by the generation device, and based on a predefined threshold for the at least one similarity, and selecting the at least one second command pipeline with the highest degree on similarity as a generated pipeline, when the threshold is exceeded by the at least one similarity,
e) Providing the generated pipeline to a command device and controlling the technical device (D) with the generated pipeline,
wherein at determining similarities at step c) an error measure based on the sum of squared differences is used: $M \left(w, p, {r}_{j}\right) = {\sum }_{i = 1}^{n} {w}_{i} {\left({p}_{i}-{r}_{i , j}\right)}^{2}$ where
*pᵢ, r_{i,j}* are percentages of programming or scripting languages in the local and remote projects, represented by the first and the at least one second command pipeline, respectively,
*wᵢ* represents the relevance to each language, represented by the first and the at least one second command pipeline, assigned manually by an user, which must be positive numbers and ${\sum }_{i = 1}^{n} {w}_{i} = 1$ ,
*n* is the maximum number of programming languages from local and remote projects, represented by the first and the at least one second command pipeline,
*i* is the index of a programming language for the first and the at least one second command pipeline,
*j* is the number of the remote project, represented by the first and the at least one second command pipeline,
and the most similar project *j*, out of the first and the at least one second command pipeline, corresponds to the minimum value of *M*(***w, p, rⱼ***)***.***

2. Method according to the preceding claim, wherein the percentages of programming or scripting languages in the local and remote projects is determined by using the number of code lines or software modules in the same language.

3. Method according to one of the preceding claims, wherein at determining similarities at step c) is performed for all of the at least one command pipeline, and a sorted list of all of the at least one command pipeline is generated according to the similarity achieved before, and when selecting the at least one second command pipeline as a generated pipeline, the item of the list is selected, which provides the lowest error measure.

4. System (S) for generating a command pipeline for controlling a technical device (D), comprising a first and at least one second database (LDB, GDB), a generation device (GD), a command device (CD) and controlling the technical device (D), and the system is configured to execute the steps of the method according to one of the preceding claims.

5. Computer-program-product with machine-readable instructions stored therein, which cause a processing unit, if executed, to execute the method according to one of the preceding method claims.

## Patentansprüche

1. Computerimplementiertes Verfahren zum Erzeugen einer Befehlspipeline als eine Continuous-Integration-Pipeline zum Steuern einer technischen Vorrichtung (D) durch eine Erzeugungsvorrichtung, das die folgenden Schritte umfasst:
a) Bereitstellen einer ersten Befehlspipeline in Form einer Continuous-Integration-Pipeline mit ersten Befehlen für die Erzeugungsvorrichtung aus einer ersten Datenbank,
b) Bereitstellen mindestens einer genehmigten zweiten Befehlspipeline in Form einer Continuous-Integration-Pipeline mit zweiten Befehlen für die Erzeugungsvorrichtung aus mindestens einer zweiten Datenbank,
c) Bestimmen von Ähnlichkeiten zwischen der ersten und der mindestens einen zweiten Befehlspipeline durch die Erzeugungsvorrichtung,
d) Identifizieren mindestens einer Ähnlichkeit zwischen der ersten und der mindestens einen zweiten Befehlspipeline durch die Erzeugungsvorrichtung und basierend auf einem vordefinierten Schwellenwert für die mindestens eine Ähnlichkeit und Auswählen der mindestens einen zweiten Befehlspipeline mit dem höchsten Ähnlichkeitsgrad als eine erzeugte Pipeline, wenn der Schwellenwert durch die mindestens eine Ähnlichkeit überschritten wird,
e) Bereitstellen der erzeugten Pipeline für eine Befehlsvorrichtung und Steuern der technischen Vorrichtung (D) mit der erzeugten Pipeline,
wobei bei Bestimmen von Ähnlichkeiten in Schritt c) ein Fehlermaß, das auf der Summe von quadrierten Differenzen basiert, verwendet wird: $M \left(w, p, {r}_{j}\right) = {\sum }_{i = 1}^{n} {w}_{i} {\left({p}_{i}-{r}_{i , j}\right)}^{2}$ wobei
*pᵢ, r_{i,j}* prozentuale Anteile von Programmier- oder Skriptsprachen in den lokalen und entfernten Projekten sind, dargestellt durch die erste beziehungsweise die mindestens eine zweite Befehlspipeline,
*wᵢ* die Relevanz für jede Sprache darstellt, dargestellt durch die erste und die mindestens eine zweite Befehlspipeline, die manuell durch einen Benutzer zugewiesen werden, die positive Zahlen und ${Σ}_{i = 1}^{n}$ *wᵢ* = 1 sein müssen,
*n* die maximale Anzahl von Programmiersprachen aus lokalen und entfernten Projekten ist, dargestellt durch die erste und die mindestens eine zweite Befehlspipeline,
*i* der Index einer Programmiersprache für die erste und die mindestens eine zweite Befehlspipeline ist,
*j* die Anzahl des entfernten Projekts ist, dargestellt durch die erste und die mindestens eine zweite Befehlspipeline,
und das ähnlichste Projekt j aus der ersten und der mindestens einen zweiten Befehlspipeline dem Minimalwert von *M*(***w,p,rⱼ***) entspricht.

2. Verfahren nach dem vorhergehenden Anspruch, wobei die prozentualen Anteile von Programmier- oder Skriptsprachen in den lokalen und entfernten Projekten durch Verwenden der Anzahl von Codezeilen oder Softwaremodulen in derselben Sprache bestimmt werden.

3. Verfahren nach einem der vorhergehenden Ansprüche, wobei das Bestimmen von Ähnlichkeiten in Schritt c) für alle der mindestens einen Befehlspipeline durchgeführt wird und eine sortierte Liste aller der mindestens einen Befehlspipeline gemäß der zuvor erreichten Ähnlichkeit erzeugt wird, und bei dem Auswählen der mindestens einen zweiten Befehlspipeline als eine erzeugte Pipeline das Element der Liste ausgewählt wird, das das geringste Fehlermaß bereitstellt.

4. System (S) zum Erzeugen einer Befehlspipeline zum Steuern einer technischen Vorrichtung (D), umfassend eine erste und mindestens eine zweite Datenbank (LDB, GDB), eine Erzeugungsvorrichtung (GD), eine Befehlsvorrichtung (CD) und Steuern der technischen Vorrichtung (D), und das System ist dazu konfiguriert, die Schritte des Verfahrens nach einem der vorhergehenden Ansprüche auszuführen.

5. Computerprogrammprodukt mit darin gespeicherten maschinenlesbaren Anweisungen, die, wenn sie ausgeführt werden, eine Verarbeitungseinheit dazu veranlassen, das Verfahren nach einem der vorhergehenden Verfahrensansprüche auszuführen.

## Revendications

1. Procédé mis en œuvre par ordinateur de génération d'un pipeline de commandes en tant que pipeline d'intégration continue pour piloter un dispositif technique (D) par un dispositif de génération, comprenant les étapes de :
a) fourniture d'un premier pipeline de commandes, sous forme d'un pipeline d'intégration continue, avec des premières commandes pour le dispositif de génération provenant d'une première base de données,
b) fourniture d'au moins un second pipeline de commandes approuvé, sous forme d'un pipeline d'intégration continue, avec des secondes commandes pour le dispositif de génération provenant d'au moins une seconde base de données,
c) détermination de similarités entre le premier pipeline de commandes et l'au moins un second pipeline de commandes par le dispositif de génération ;
d) identification d'au moins une similarité entre le premier pipeline de commandes et l'au moins un second pipeline de commandes par le dispositif de génération, sur la base d'un seuil prédéfini pour l'au moins une similarité, et sélection de l'au moins un second pipeline de commandes ayant le degré de similarité le plus élevé en tant que pipeline généré, lorsque le seuil est dépassé par l'au moins une similarité,
e) fourniture du pipeline généré à un dispositif de commande et pilotage du dispositif technique (D) avec le pipeline généré,
dans lequel, lors de la détermination de similarités à l'étape c), une mesure d'erreur basée sur la somme des différences au carré est utilisée : $M \left(w, p, {r}_{j}\right) = {\sum }_{i = 1}^{n} {w}_{i} {\left({p}_{i}-{r}_{i , j}\right)}^{2}$ où
*pᵢ,r_{i,j}* sont les pourcentages de langages de programmation ou de script dans les projets locaux et distants, représentés respectivement par le premier pipeline de commandes et l'au moins un second pipeline de commandes, respectivement,
*wᵢ* représente la pertinence pour chaque langage, représentée par le premier pipeline de commandes et l'au moins un second pipeline de commandes, attribuée manuellement par un utilisateur, qui doivent être des nombres positifs et ${\sum }_{i = 1}^{n} {w}_{i} = 1$,
*n* est le nombre maximal de langages de programmation provenant des projets locaux et distants, représenté par le premier pipeline de commandes et l'au moins un second pipeline de commandes, est l'indice d'un langage de programmation pour le premier pipeline de commandes et l'au moins un second pipeline de commandes,
*j* est le numéro du projet distant, représenté par le premier pipeline de commandes et l'au moins un second pipeline de commandes,
et le projet le plus similaire j, parmi le premier pipeline de commandes et l'au moins un second pipeline de commandes, correspond à la valeur minimale de *M*(*w,p, rⱼ*).

2. Procédé selon la revendication précédente, dans lequel les pourcentages de langages de programmation ou de script dans les projets locaux et distants sont déterminés en utilisant le nombre de lignes de code ou de modules logiciels dans le même langage.

3. Procédé selon l'une des revendications précédentes, dans lequel, si la détermination de similarités à l'étape c) est effectuée pour l'ensemble de l'au moins un pipeline de commandes, et une liste triée de l'ensemble de l'au moins un pipeline de commandes est générée en fonction de la similarité obtenue précédemment, et, lors de la sélection de l'au moins un second pipeline de commandes en tant que pipeline généré, l'élément de la liste qui fournit la plus faible mesure d'erreur est sélectionné.

4. Système (S) de génération d'un pipeline de commandes pour piloter un dispositif technique (D), comprenant une première et au moins une seconde base de données (LDB, GDB), un dispositif de génération (GD), un dispositif de commande (CD) et pilotant le dispositif technique (D), et le système est configuré pour exécuter les étapes du procédé selon l'une des revendications précédentes.

5. Produit de programme informatique avec des instructions lisibles par machine stockées dans celui-ci, qui, lors de l'exécution, amènent une unité de traitement à exécuter le procédé selon l'une des revendications de procédé précédentes.
